# EUROPÄISCHE PATENTSCHRIFT

(11) **EP 0 702 039 B1**
(45) Veröffentlichungstag und Bekanntmachung des Hinweises auf die Patenterteilung: **14.04.1999**
(21) Anmeldenummer: 95112276.1
(22) Anmeldetag: 04.08.1995
(51) Int. Cl.: C08G 18/42, C08G 18/48

(54) **Isocyanatprepolymere, ein Verfahren zu ihrer Herstellung und ihre Verwendung**
Isocyanate prepolymers, their preparation process and their use
Prépolymères d'isocyanate, procédé de leur préparation et leur utilisation

(30) Priorität: 17.08.1994 DE 4429076
(43) Veröffentlichungstag der Anmeldung: 20.03.1996
(73) Patentinhaber: BAYER AG, 51368 Leverkusen (DE)
(72) Erfinder: Schmalstieg, Lutz, Dr., D-50676 Köln (DE); Rettig, Rainer, Dr., D-51515 Kürten (DE); Walter, Ulrich, D-40723 Hilden (DE); Hortelano, Edwin R., Dr., Houston, Texas 77062 (US)

(56) Entgegenhaltungen:
- EP-A- 0 083 797
- DE-A- 3 132 124

## Beschreibung

Die Erfindung betrifft neue Isocyanatprepolymere auf Basis von ausgewählten Ausgangsmaterialien, ein Verfahren zu ihrer Herstellung und ihre Verwendung zur Herstellung von Dichtungs- und Beschichtungsmaterialien.

Bindemittel für Dichtungs- oder Beschichtungsmaterialien, bestehend aus Isocyanatprepolymeren und (potentiell) gegenüber Isocyanaten reaktiven Verbindungen sind in großer Fülle bekannt. So beschreibt z.B. die DE-OS 1 520 139 ein Verfahren zur Herstellung von feuchtigkeitshärtenden Mischungen aus Polyisocyanaten und Polyketiminen oder Polyaldiminen, wobei als Polyisocyanate vorzugsweise Isocyanat-Prepolymere (NCO-Prepolymere) verwendet werden. Die DE-AS 1 240 654 beschreibt ein Verfahren zur Herstellung von vernetzten Kunststoffen aus NCO-Prepolymeren und speziellen aromatischen Diaminen. Die DE-OS 2 018 233 beschreibt durch Feuchtigkeit härtbare Zubereitungen aus Isocyanatgruppen aufweisenden Verbindungen und Polyoxazolidinen.

Allen Veröffentlichungen des Standes der Technik ist gemeinsam, daß die verwendeten NCO-Prepolymere solche der aus der Polyurethanchemie bekannten Art sind, wie sie durch Reaktion von höhermolekularen Polyhydroxylverbindungen wie z.B. Polyether- oder Polyester-Polyolen mit überschüssigen Mengen Di-oder Polyisocyanat hergestellt werden.

Für die Beschichtung mineralischer Untergründe im Außenbereich werden NCO-Prepolymere gesucht, die gleichzeitig licht- und verseifungsstabil sind.

NCO-Prepolymere auf Basis von Polyetherpolyolen zeigen eine gute Verseifungsbeständigkeit, sind aber bekanntlich nur wenig lichtstabil. NCO-Prepolymere auf Basis von Polyesterpolyolen zeigen dagegen eine gute Lichtbeständigkeit, können aber aufgrund ihrer schlechten Verseifungsbeständigkeit nicht in direkten Kontakt mit mineralischen Untergründen gebracht werden.

NCO-Prepolymere auf Basis von Polycarbonatpolyolen erfüllen zwar die Forderung nach guter Licht- und Verseifungsstabilität, diese Prepolymere sind jedoch extrem hochviskos und kristallin und können nur unter Verwendung großer Lösemittelmengen appliziert werden.

Prinzipiell einsetzbar sind zwar Prepolymere auf Basis von Polyestercarbonatpolyolen der in DE-OS 3 200 430 beschriebenen Art, jedoch liegt deren Nachteil in einer immer noch zu hohen Viskosität, so daß sie nur unter Zusatz von Weichmachern oder Lösungsmitteln verarbeitet werden können.

Die Verwendung von Lösungsmitteln ist aber bekanntlich unter ökologischen Gesichtspunkten von Nachteil. Auch der Einsatz von Weichmachern ist mit Nachteilen verbunden. Weichmacher verbleiben in den Beschichtungen, können die mechanischen Eigenschaften der Polymere verschlechtern, die Haftung zum Substrat beeinträchtigen und schließlich auf lange Sicht aus den Beschichtungen auswandern.

Die der Erfindung zugrundeliegende Aufgabe bestand daher darin , neue Ein-oder Mehrkomponentenbindemittel auf Basis von NCO-Prepolymeren zur Verfügung zu stellen, die bei guter Licht- und Hydrolysestabilität wesentlich niedrigere Viskositäten aufweisen als vergleichbare Bindemittel des Standes der Technik.

Diese Aufgabe konnte überraschenderweise mit den nachstehend näher beschriebenen Ether-, Ester- und Carbonatgruppen aufweisenden Isocyanatprepolymeren gelöst werden, obwohl diese sowohl lichtempfindliche Polyetherketten als auch hydrolyseempfindliche Estergruppen aufweisen.

Gegenstand der Erfindung sind Isocyanatprepolymere mit einem NCO-Gehalt von 1,5 bis 5,0 Gew.-% und einem Gehalt an monomerem Diisocyanat von unter 0,5 Gew.-%, die Umsetzungsprodukte von
A) einer im wesentlichen aus mindestens einem aromatischen oder cycloaliphatischen Diisocyanat bestehenden Isocyanatkomponente mit
B) einer Polyolkomponente
darstellen, dadurch gekennzeichnet, daß die Polyolkomponente B) im wesentlichen aus einem Gemisch aus
B1) mindestens einem Polyetherpolyol des Molekulargewichtsbereichs 1000 bis 3000 einer (mittleren) Hydroxylfunktionalität von 2 bis 4 und
B2) mindestens einem Polyestercarbonatdiol des Molekulargewichtsbereichs 700 bis 3000 auf Basis (i) mindestens eines Diols des maximalen Molekulargewichts 200, (ii) ε-Caprolacton und/oder ε-Hydroxycapronsäure im Molverhältnis (i) : (ii) von 4:1 bis 1:3 und (iii) Diarylcarbonaten
im Gewichtsverhältnis B1) : B2) 0,25:1 bis 1,5:1 besteht.

Gegenstand der Erfindung ist auch ein Verfahren zur Herstellung derartiger Isocyanatprepolymere durch Umsetzung einer Isocyanatkomponente A), bestehend im wesentlichen aus mindestens einem cycloaliphatischen oder aromatischen Diisocyanat mit einer Polyolkomponente B) unter Einhaltung eines NCO/OH-Äquivalentverhältnisses von mindestens 1,5:1, gegebenenfalls unter anschließender destillativer Entfernung von nicht umgesetztem monomerem Diisocyanat bis auf einen Restgehalt von weniger als 0,5 Gew.-%, dadurch gekennzeichnet, daß die Polyolkomponente B) im wesentlichen aus einem Gemisch aus
B1) mindestens einem Polyetherpolyol des Molekulargewichtsbereichs 1000 bis 3000 einer (mittleren) Hydroxylfunktionalität von 2 bis 4 und
B2) mindestens einem Polyestercarbonatdiol des Molekulargewichtsbereichs 700 bis 3000 auf Basis (i) mindestens eines Diols des maximalen Molekulargewichts 200, (ii) ε-Caprolacton und/oder ε-Hydroxycapronsäure im Molverhältnis (i) : (ii) von 4:1 bis 1:3 und (iii) Diarylcarbonaten
im Gewichtsverhältnis B1) : B2) 0,25:1 bis 1,5:1 besteht.

Gegenstand der Erfindung ist schließlich auch die Verwendung der neuen Isocyanatprepolymeren zur Herstellung von Dichtungs- und Beschichtungsmaterialien.

Die Herstellung der erfindungsgemäßen Isocyanatprepolymeren nach dem erfindungsgemäßen Verfahren erfolgt durch Umsetzung von Diisocyanaten A) mit Polyetherpolyolen B1) und Polyestercarbonatdiolen B2) im Temperaturbereich von 40 bis 120°C, vorzugsweise 50 bis 100°C unter Einhaltung eines NCO/OH-Äquivalentverhältnisses von 1,5:1 bis 20:1, vorzugsweise 1,6:1 bis 10:1. Falls bei der Herstellung der Isocyanatprepolymeren eine Kettenverlängerung über Urethangruppen in Kauf genommen werden kann bzw. erwünscht ist, wählt man ein NCO/OH-Äquivalentverhältnis von 1,5:1 bis 2:1. Falls eine Kettenverlängerungsreaktion vermieden werden soll, verwendet man vorzugsweise einen Überschuß an Diisocyanat, entsprechend einem NCO/OH-Äquivalentverhältnis von 4:1 bis 20:1, vorzugsweise 5:1 bis 10:1 und entfernt nach beendeter Reaktion das überschüssige Diisocyanat durch Dünnschichtdestillation bis zu einem Restgehalt an freiem Diisocyanat von weniger als 0,5 Gew.-%, vorzugsweise weniger als 0,3 Gew.-%.

Als Ausgangskomponente A) werden beim erfindungsgemäßen Verfahren aromatische oder cycloaliphatische Diisocyanate bzw. Gemische derartiger Diisocyanate eingesetzt. Unter "aromatischen" bzw. "cycloaliphatischen" Diisocyanaten sind dabei solche zu verstehen, die pro Molekül mindestens einen aromatischen bzw. cycloaliphatischen Ring aufweisen, wobei vorzugsweise, jedoch nicht zwingend mindestens eine der beiden Isocyanatgruppen direkt mit einem aromatischen bzw. cycloaliphatischen Ring verknüpft ist. Als Komponente A) bzw. Teil der Komponente A) geeignet sind beispielsweise aromatische oder cycloaliphatische Diisocyanate des Molekulargewichtsbereichs 174 bis 300 wie 2,4-Diisocyanatotoluol oder dessen technische Gemische mit vorzugsweise bis zu 35 Gew.-%, bezogen auf Gemisch, an 2,6-Diisocyanatotoluol, Bis-(4-isocyanatocyclohexyl)methan, 1-Isocyanato-3,3,5-trimethyl-5-isocyanatomethylcyclohexan (IPDI), 1-Isocyanato-1-methyl-4(3)-isocyanatomethylcyclohexan, 1,3-Diisocyanato-6-methyl-cyclohexan gegebenenfalls im Gemisch mit 1,3-Diisocyanato-2-methylcyclohexan. Selbstverständlich sind auch Mischungen der genannten Isocyanate einsetzbar.

Bevorzugt ist der Einsatz von Diisocyanaten A), die deutlich unterschiedlich reaktive Isocyanatgruppen im Molekül aufweisen. Solche bevorzugt einsetzbaren Diisocyanate sind beispielsweise 2,4-Diisocyanatotoluol oder 1-Isocyanato-1-methyl-4(3)-isocyanatomethylcyclohexan. Diese Diisocyanate werden im allgemeinen einem NCO/OH-Verhältnis von 1,5:1 bis 2:1 entsprechend eingesetzt und liefern direkt, d.h. ohne Dünnschichtdestillation NCO-Prepolymere mit einem Restgehalt an freiem Diisocyanat von weniger als 0,5 Gew.-%.

Der Einsatz von 2,4-Diisocyanatotoluol als Komponente A) ist ganz besonders bevorzugt.

Die erfindungsgemäß als Komponente B1) einzusetzenden Polyalkylenetherpolyole werden nach bekannten Verfahren durch Alkoxylierung von geeigneten Startermolekülen hergestellt und besitzen ein aus Hydroxylfunktionalität und Hydroxylgruppengehalt berechenbares mittleres Molekulargewicht von 1000 bis 3000, vorzugsweise 1500 bis 2000. Geeignete Startermoleküle sind beispielsweise einfache Polyole, Wasser, organische Polyamine mit mindestens zwei NH-Bindungen oder beliebige Gemische derartiger Startermoleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können. Grundsätzlich möglich ist ebenfalls die Mitverwendung von einwertigen Polyetheralkoholen, so daß Etheralkohole B1) einer (mittleren) Hydroxylfunktionalität von 2 bis 4 zum Einsatz gelangen. Vorzugsweise liegt die (mittlere) Hydroxylfunktionalität der Polyetheralkohole B1) bei 2 bis 3. Besonders bevorzugt werden als Komponente B1) Polyetherpolyole des Molekulargewichtsbereichs 1500 bis 2000 eingesetzt, die sowohl Ethylenoxid als Propylenoxid innerhalb der Polyetherketten im Gewichtsverhältnis von 30:70 bis 60:40 enthalten. Dabei können die genannten Alkylenoxideinheiten sowohl in Form von Ethylenoxid- bzw. Propylenoxid-Blöcken als auch in statistischer Verteilung (Verwendung von Gemischen aus Ethylenoxid und Propylenoxid bei der Alkoxylierung) vorliegen. Derartige spezielle Polyether weisen eine besonders gute Verträglichkeit mit der Komponente B2) auf.

Bei den als Komponente B2) einzusetzenden Polyestercarbonatdiolen handelt es sich um solche mit einem aus Hydroxylfunktionalität und Hydroxylgruppengehalt errechenbaren mittleren Molekulargewicht von 700 bis 3000, vorzugsweise 1500 bis 2500. Diese Polyestercarbonatdiole stellen Umsetzungsprodukte aus (i) einem Diol des maximalen Molekulargewichts 200, vorzugsweise 1,6-Hexandiol, (ii) ε-Caprolacton bzw. ε-Hydroxycapronsäure und (iii) Diarylcarbonaten dar, wobei das Molverhältnis von (i) zu (ii) zwischen 4:1 und 1:3, vorzugsweise zwischen 2:1 und 1:2 und besonders bevorzugt zwischen 1,2:1 und 1:1,2 gehalten wird. Die Herstellung derartiger Dihydroxypolycarbonate erfolgt nach an sich bekannten Verfahren (Houben-Weyl, XIV/2, S. 48) und ist beispielsweise auch in US-PS 3 640 967 beschrieben. Zunächst wird hierzu das Diol mit ε-Caprolacton bzw. ε-Hydroxycapronsäure unter Ringöffnung bzw. Wasseraustritt zu einem Esterglykol umgesetzt und dieses mit unterschüssigem Diarylcarbonat unter Abspaltung und Entfernung der entsprechenden Phenolverbindung thermisch in das entsprechende OH-Endgruppen enthaltende Polyester-Polycarbonat überführt. Als Diarylcarbonate sind neben Diphenylcarbonat z.B. auch Dinaphthylcarbonat und Dikresylcarbonat geeignet.

Es ist erfindungswesentlich, daß die Dihydroxypolyestercarbonate unter Einhaltung der obengenannten Mengenverhältnisse hergestellt werden, da Dihydroxycarbonate, die unter Verwendung anderer Mengenverhältnisse der Ausgangskomponenten (i) und (ii) hergestellt worden sind, einerseits einen zu hohen Schmelzpunkt für die erfindungsgemäße Verwendung aufweisen und andererseits zu Polyurethanen führen, die keine ausreichende Verseifungsbeständigkeit besitzen.

Zur Herstellung der erfindungsgemäßen Isocyanatprepolymeren werden die Polyolkomponenten B1) und B2) entsprechend einem Gewichtsverhältnis von 0,25 bis 1,5 : 1, bevorzugt 0,5 : 1 bis 1:1 eingesetzt.

Die erfindungsgemäßen Isocyanatprepolymere weisen einen NCO-Gehalt von 1,5 bis 5, vorzugsweise 1,7 bis 4,5 Gew.-% und einen Gehalt an monomerem Diisocyanat von weniger als 0,5 Gew.-% auf. Die Viskosität der lösungsmittelfreien Produkte liegt im allgemeinen unter 80 000, vorzugsweise unter 30 000 mPa.s (23°C).

Die erfindungsgemäßen Isocyanatprepolymeren eignen sich insbesondere als Rohstoffe zur Formulierung von lösungsmittelfreien oder lösungsmittelarmen Beschichtungsmitteln oder Dichtungsmassen. Die Prepolymere lassen sich, gegebenenfalls nach Zusatz an sich bekannter Katalysatoren, wie z.B. Dibutylzinn(IV)-dilaurat und gegebenenfalls der in der Beschichtungstechnologie üblichen Pigmenten, Füll- und Hilfsstoffen der auch nachstehend beispielhaft genannten Art durch die Einwirkung von Luftfeuchtigkeit aushärten und ergeben Polymerfilme mit ausgezeichneten mechanischen Eigenschaften und hoher Lichtbeständigkeit.

Die erfindungsgemäßen NCO-Prepolymeren, können jedoch auch, gegebenenfalls in mit Blockierungsmitteln für Isocyanatgruppen blockierter Form, mit geeigneten Reaktivkomponenten zu selbsthärtenden Systemen abgemischt werden. In derartigen Systemen würden die erfindungsgemäßen Prepolymeren die Komponente a) und die Reaktivkomponente die Komponente b) darstellen.

Die Reaktivkomponente b) besteht aus mindestens einer Verbindung mit mindestens zwei gegenüber Isocyanatgruppen reaktionsfähigen Gruppen oder mindestens zwei hydrolytisch in derartige Gruppen überführbaren Gruppen. Ebenfalls möglich, jedoch weniger bevorzugt, ist die Verwendung von solchen Verbindungen, die sowohl freie als auch derartige reversibel blockierte, gegenüber Isocyanatgruppen reaktionsfähige Gruppen aufweisen. Weiterhin möglich, jedoch ebenfalls weniger bevorzugt, ist die Verwendung von unterschiedlichen derartigen Verbindungen, auch von solchen Gemischen, die sowohl Verbindungen mit freien als auch Verbindungen mit reversibel blockierten, gegenüber Isocyanatgruppen reaktionsfähigen Gruppen aufweisen. Vorzugsweise weisen die Verbindungen der Komponente b) pro Molekül insgesamt 2 bis 4 freie oder blockierte, gegenüber Isocyanatgruppen reaktionsfähige Gruppen auf. Das Molekulargewicht der die Komponente b) darstellenden Verbindungen ist nicht kritisch. Vorzugsweise werden jedoch vergleichsweise niedermolekulare Verbindungen, d.h. solche mit einem maximalen Molekulargewicht von 600 eingesetzt.

Die Menge der Komponente b) wird im übrigen so bemessen, daß in den Bindemitteln das Molverhältnis von Isocyanatgruppen der Komponente a) zu freien und/oder reversibel blockierten, gegenüber Isocyanatgruppen reaktionsfähigen Gruppen der Komponente b) bei 0,8:1 bis 10:1, vorzugsweise 0,9:1 bis 4:1, insbesondere 1:1 bis2:1 und, besonders bevorzugt 1:1 bis 1,2:1, liegt.

Als Komponente b) oder als Teil der Komponente b) kommen beispielsweise in Betracht:
- Polyoxazolidine der aus der Polyurethanchemie an sich bekannten Art, wie sie z.B. in DE-PS 2 018 233 (= US-PS 3 143 626) oder DE-OS 2 446 438 (= US-PS 4 002 601) beschrieben sind;
- Polyketimine oder Polyaldimine der aus der Polyurethanchemie an sich bekannten Art, wie sie beispielsweise in DE-OS 1 520 139 (= US-PS 3 420 800) bzw. US-PS 3 567 692) oder DOS 3 308 418 (= US-PS 4 481 345) beschrieben sind;
- aromatische Polyamine, insbesondere Diamine mit sterisch gehinderten Aminogruppen, wie sie beispielsweise gemäß US-PS 4 218 543 als Kettenverlängerungsmittel eingesetzt werden, besonders bevorzugt das 1-Methyl-3,5-diethyl-2,4-diaminobenzol bzw. dessen technischen Gemische mit 1-Methyl-3,5-diethyl-2,6-diaminobenzol
   oder
- mehrwertige Alkohole des Molekulargewichtsbereichs 62 bis 399 oder auch eines Molekulargewichtes von mindestens 400.

Geeignete niedermolekulare Alkohole sind beispielsweise Ethylenglykol, Propylenglykol, Butandiol-1,4, Glycerin, Trimethylolpropan, Pentaerythrit, Diethylenglykol, Dipropylenglykol oder Gemische derartiger Polyole. Geeignete höhermolekulare Alkohole sind beispielsweise die oben beispielhaft genannten Ausgangsmaterialien B1) und B2) für die Herstellung der Polyisocyanatprepolymeren. Ferner geeignet sind auch andere Polyhydroxylverbundungen wie beispielsweise Epoxidharze, Phenolharze, Alkydharze, Rizinusöl, Hydroxylgruppen aufweisende Polyesterharze oder Hydroxylgruppen aufweisende Silikonharze.

Zur Herstellung der Zweikomponentenbindemittel werden die Einzelkomponenten a) und b) miteinander vermischt. Im Falle der Verwendung von Isocyanatprepolymeren a) mit freien Isocyanatgruppen und von Verbindungen b) mit reversibel blockierten, gegenüber Isocyanatgruppen entstehen hierbei lagerstabile Zubereitungen, die in Abwesenheit von Feuchtigkeit lagerstabil sind und nach Applikation auf ein geeignetes Substrat in Gegenwart von Feuchtigkeit schnell aushärten. Erforderlichenfalls kann die Härtungsreaktion auch durch Zugabe von an sich bekannten Katalysatoren wie beispielsweise p-Toluolsulfonsäure, Dibutylzinnoctoat oder Zinkchlorid beschleunigt werden.

Im Falle der Verwendung von Reaktivkomponenten b), die freie, gegenüber Isocyanatgruppen reaktionsfähige Gruppen, d.h., insbesondere Amino- oder Hydroxylgruppen aufweisen, und im Falle der gleichzeitigen Verwendung von Isocyanatprepolymeren a) mit freien NCO-Gruppen entstehen Reaktionsgemische, die bereits bei Raumtemperatur zu Polyurethanen bzw. Polyharnstoffen ausreagieren, d.h., die nur eine begrenzte Topfzeit aufweisen und innerhalb dieser Topfzeit verarbeitet werden müssen.

Im Falle der Verwendung von Isocyanatprepolymeren a) mit blockierten Isocyanatgruppen und Reaktivkomponenten mit unblockierten, gegenüber Isocyanatgruppen reaktionsfähigen Gruppen, insbesondere in Kombination mit Polyhydroxylverbindungen entstehen an sich bekannte Einbrennsysteme, die zur Herstellung von Einbrennlacken verwendet werden können.

Geeignete Blockierungsmittel sind solche der an sich bekannten Art wie beispielsweise ε-Caprolactam, Butanonoxim oder Malonsäurediethylester.

Im übrigen ist der hier verwendete Begriff "Zweikomponenten-Bindemittel" dahingehend zu verstehen, daß die erfindungsgemäßen Bindemittel aus den Einzelkomponenten a) und b) bestehen, wobei die Einzelkomponenten im Falle der Verwendung von blockierten Einzelkomponenten a) und/oder b) auch zu einem "Eintopf-System" vereinigt werden können.

Die erfindungsgemäß in Betracht gezogenen Reaktivsysteme aus gegebenenfalls blockierten Isocyanatprepolymeren a) und Reaktivkomponenten b) der beispielhaft genannten Art können als solche, d.h. ohne Mitverwendung von weiteren Hilfs-und Zusatzmitteln als Beschichtungsmittel oder Dichtmassen verwendet werden. Vorzugsweise erfolgt ihr Einsatz jedoch in Kombination mit Hilfs- und Zusatzmitteln c) der an sich bekannten Art.

Als Hilfs- und Zusatzmittel c) kommen beispielsweise Lösungsmittel in Betracht, wie z.B. Ethylacetat, Butylacetat, Methylethylketon, Methylisobutylketon, Methoxypropylacetat, Ethylenglykolmonoethyletheracetat, Toluol, Xylol, Testbenzin oder beliebige Gemische dieser Lösungsmittel. Hierbei ist jedoch hervorzuheben, daß die erfindungsgemäße Verwendung entweder lösungsmittelfrei oder nur unter Verwendung geringer Lösungsmittelmengen erfolgt. Die Lösungsmittel werden demzufolge allenfalls in einer Menge von bis zu 40, vorzugsweise bis zu 20 Gew.-%, bezogen auf das Gesamtgewicht der Komponenten a) - c), mitverwendet.

Weitere gegebenenfalls mitzuverwendende Hilfs- und Zusatzmittel sind z.B. Weichmacher wie z.B. Trikresylphosphat oder Phthalsäurediester, Chlorparaffine, Pigmente und Füllstoffe, wie Titanoxid, Bariumsulfat, Kreide, Ruß, Katalysatoren, wie z.B. N,N-Dimethylbenzylamin, N-Methylmorpholin, Bleioctoat oder Dibutylzinndilaurat; Verlaufmittel; Verdickungsmittel, Stabilisatoren wie substituierte Phenole oder organofunktionelle Silane als Haftvermittler.

Beschichtungsmaterialien auf Basis der erfindungsgemäßen Isocyanatprepolymere eignen sich aufgrund ihrer hervorragenden mechanischen Eigenschaften und ihrer guten Hydrolysestabilität ganz besonders zur Herstellung flächiger Abdichtungen im Baubereich. Die mechanischen und optischen Eigenschaften solcher Beschichtungen ändern sich bei Alterung und Belichtung praktisch nicht.

Die folgenden Beispiele sollen das erfindungsgemäße Verfahren erläutern, jedoch nicht einschränken. Alle Prozentangaben beziehen sich auf Gewichtsprozente.

### Beispiele

In den Beispielen und Vergleichsbeispielen werden die folgenden Polyole verwendet:

### Polyol A

Ein flüssiges Polyesterpolycarbonatdiol, hergestellt gemäß DE-AS 1 770 245 aus Hexandiol-1,6, ε-Caprolacton und Diphenylcarbonat im Molverhältnis von 8:8:7. OH-Zahl 56, Viskosität 20 000 mPa.s (23°C).

### Polyol B

Polyetherdiol, hergestellt durch Alkoxylierung von Propylenglykol, wobei Propylenoxid und Ethylenoxid im Gemisch im Gewichtsverhältnis 1:1 eingesetzt wird, OH-Zahl 56, Viskosität 350 mPa.s (23°C).

### Polyol C

Polyetherdiol, hergestellt durch Propoxylierung von Propylenglykol, OH-Zahl 112, Viskosität 150 mPa.s (23°C).

### Beispiel 1 (Herstellung eines erfindungsgemäßen NCO-Prepolymeren)

Aus 1000 Gew.-Teilen Polyol A, 1000 Gew.-Teilen Polyol B und 304,8 Gew.-Teilen 2,4-Dicyanatotoluol stellt man durch Verrühren bei 60°C ein NCO-Prepolymer mit einem NCO-Gehalt von 2,7 % her. Man verdünnt mit 200,5 Gew.-Teilen Methoxypropylacetat und erhält ein NCO-Prepolymer mit folgenden Kenndaten:
- Festkörpergehalt:: 90 %
- NCO-Gehalt:: 2,5 %
- Restmonomergehalt:: 0,08 %
- Viskosität:: 9700 mPa.s (23°C)

### Herstellung einer feuchtigkeitshärtenden Beschichtung:

Ein auf eine Glasplatte aufgebrachter film trocknet an der Luft innerhalb von 9 Stunden zu einer hochelastischen Beschichtung mit folgenden mechanischen Eigenschaften:
- Reißfestigkeit:: 8,1 N/mm²
- Reißdehnung:: 765 %
- Weiterreißwiderstand:: 14,9 N/mm
- Shore-A-Härte:: 54

### Beispiel 2 (Herstellung eines erfindungsgemäßen Prepolymers)

Aus 1000 Gew.-Teilen Polyol A, 500 Gew.-Teilen Polyol C und 304,8 Gew.-Teilen 2,4-Dicyanatotoluol stellt man durch Verrühren bei 60°C ein NCO-Prepolymer mit einem NCO-Gehalt von 3,5 % her. Man verdünnt mit 200,5 Gew.-Teilen Methoxypropylacetat. Man erhält ein NCO-Prepolymer mit folgenden Kenndaten:
- Festkörpergehalt:: 80 %
- NCO-Gehalt: 2,8 %
- Restmonomergehalt:: 0,14 %
- Viskosität:: 3200 mPa.s (23°C)

### Herstellung einer feuchtigkeitshärtenden Beschichtung:

Ein auf eine Glasplatte aufgezogener Film härtet innerhalb von 9 Stunden zu einer klaren, hochelastischen Beschichtung einer Shore A-Härte von 58.

### Beispiel 3 (Herstellung eines erfindungsgemäßen Prepolymers)

Aus 1000 g Polyol A, 1000 g Polyol B und 2220 g IPDI stellt man durch Verrühren bei 80°C ein NCO-Prepolymer mit einem NCO-Gehalt von 17,9 % her. Überschüssiges Diisocyanat wird durch Vakuum-Dünnschichtdestillation bei 150°C/0,2 mbar entfernt. Man erhält 2230 g eines viskosen Harzes mit einem NCO-Gehalt von 3,3 %. Man verdünnt mit 557 g Methoxypropylacetat und erhält ein NCO-Prepolymer mit folgenden Kenndaten:
- Festkörpergehalt:: 80 %
- NCO-Gehalt:: 2,6 %
- Restmonomergehalt:: 0,1 %
- Viskosität:: 920 mPa.s (23°C)

### Herstellung einer feuchtigkeitshärtenden Beschichtung:

Eine Probe des Prepolymers wird mit 0,05 Gew.-% Dibutylzinn(IV)dilaurat verrührt. Ein auf eine Glasplatte aufgebrachter Film trocknet an der Luft innerhalb von 12 Stunden zu einer klaren, elastischen Beschichtung einer Shore A-Härte von 52.

### Beispiel 4 (Herstellung eines erfindungsgemäßen Prepolymers)

Aus 1000 g Polyol A, 1000 g Polyol B und 2620 g Bis-(4-isocyanatocyclohexyl)-methan stellt man durch Verrühren bei 80°C ein NCO-Prepolymer mit einem NCO-Gehalt von 16,3 % her. Überschüssiges Diisocyanat wird durch Vakuumdünnschichtdestillation bei 160°C/0,2 mbar entfernt. Man erhält 2420 g eines viskosen Harzes mit einem NCO-Gehalt von 3,1 %. Man verdünnt das erhaltene Produkt mit 605 g Methoxypropylacetat. Das erhaltene NCO-Prepolymer besitzt folgende Kenndaten:
- Festkörpergehalt:: 80 %
- NCO-Gehalt:: 2,5 %
- Restmonomergehalt:: 0,2 %
- Viskosität:: 1200 mPa.s (23°C)

### Beispiel 5 (Nicht erfindungsgemäßes Vergleichsbeispiel)

### Herstellung eines Carbonat- und Estergruppen aufweisenden Prepolymers

2000 g Polyol A und 2220 g IPDI werden bei 80°C prepolymerisiert bis ein NCO-Gehalt von 17,9 % erreicht ist. Danach entfernt man überschüssiges Isophorondiisocyanat durch Vakuumdünnschichtdestillation bei 150°C/0,2 mbar. Man erhält 2190 g eines viskosen Harzes mit einem NCO-Gehalt von 3,4 %. Man verdünnt das Produkt mit 547 g Methoxypropylacetat und erhält ein NCO-Prepolymer mit folgenden Kenndaten:
- Festkörpergehalt:: 80 %
- NCO-Gehalt:: 2,7 %
- Restmonomergehalt:: 0,1 %
- Viskosität:: 9500 mPa.s (23°C)

### Beispiel 6 (Nicht erfindungsgemäßes Vergleichsbeispiel)

### Herstellung eines Ethergruppen aufweisenden Prepolymers

1000 g Polyol B und 1000 g Polyol C werden mit 2610 g 2,4-Diisocyanatotoluol bei 60°C prepolymerisiert, bis ein NCO-Gehalt von 24,5 % erreicht ist. Danach entfernt man überschüssiges Diisocyanatotoluol durch Vakuumdünnschichtdestillation bei 150°C/2 mbar. Man erhält ein flüssiges Isocyanatprepolymer mit folgenden Kenndaten:
- Festkörpergehalt:: 100 %
- NCO-Gehalt:: 4,4 %
- Restmonomergehalt:: 0,15 %
- Viskosität:: 6500 mPa.s (23°C)

### Beispiel 7

### Formulierung von Beschichtungsmassen und Vergleich der Bewitterungseigenschaften:

Die NCO-Prepolymere aus Beispiel 1, 3, 5 und 6 wurden in einem Vakuumdissolver gemäß der nachstehenden Formulierung zu Beschichtungsmassen verarbeitet:

| | Gew.-Teile |
|---|---|
| NCO-Prepolymer | 45,5 |
| Schwerspat | 41,9 |
| Titandioxid | 2,7 |
| Methoxypropylacetat | 4,8 |
| Dibutylzinndilaurat | 0,1 |
| Härter OZ* | 5,1 |

| | |
|---|---|
| * Urethanbisoxazolidin, Handelsprodukt der Bayer AG | |

Die Beschichtungsmassen wurden in einer Schichtdicke von 2 mm auf Prüfbleche aufgebracht und nach der Härtung in einem handelsüblichen Kurzbewitterungsgerät (Xenontest 1200) 2000 Stunden lang bewittert.

Ergebnisse der Kurzbewitterung:

| Prepolymer aus Bsp. | 1 | 3 | 5 | 6 |
|---|---|---|---|---|
| Kreidung | keine | keine | keine | sehr stark |
| Versprödung | keine | keine | keine | stark |
| Farbtonveränderung | gering | gering | gering | gering |

## Patentansprüche

1. Isocyanatprepolymere mit einem NCO-Gehalt von 1,5 bis 5,0 Gew.-% und einem Gehalt an monomerem Diisocyanat von unter 0,5 Gew.-%, die Umsetzungsprodukte von
A) einer im wesentlichen aus mindestens einem aromatischen oder cycloaliphatischen Diisocyanat bestehenden Isocyanatkomponente mit
B) einer Polyolkomponente
darstellen, dadurch gekennzeichnet, daß die Polyolkomponente B) im wesentlichen aus einem Gemisch aus
B1) mindestens einem Polyetherpolyol des Molekulargewichtsbereichs 1000 bis 3000 einer (mittleren) Hydroxylfunktionalität von 2 bis 4 und
B2) mindestens einem Polyestercarbonatdiol des Molekulargewichtsbereichs 700 bis 3000 auf Basis (i) mindestens eines Diols des maximalen Molekulargewichts 200, (ii) ε-Caprolacton und/oder ε-Hydroxycapronsäure im Molverhältnis (i) : (ii) von 4:1 bis 1:3 und (iii) Diarylcarbonaten
im Gewichtsverhältnis B1) : B2) 0,25:1 bis 1,5:1 besteht.

2. Isocyanatprepolymere gemäß Anspruch 1, dadurch gekennzeichnet, daß die Komponente A) aus mindestens einem Diisocyanat mit unterschiedlich reaktiven Isocyanatgruppen besteht und bei der Umsetzung der Komponenten A) und B) unter Einhaltung eines NCO/OH-Äquivalentverhältnisses von maximal 2:1 gearbeitet worden ist.

3. Isocyanatprepolymere gemäß Anspruch 1 und 2, dadurch gekennzeichnet, daß als Komponente A) 2,4-Diisocyanatotoluol eingesetzt worden ist.

4. Isocyanatprepolymere gemäß Anspruch 1 bis 3, dadurch gekennzeichnet, daß als Komponente B1) Polyetherpolyole eines mittleren Molekulargewichts von 1500 bis 2000 mit eingebauten Ethylenoxid- und Propylenoxid-Einheiten im Gewichtsverhältnis 30:70 bis 60:40 eingesetzt worden sind.

5. Isocyanatprepolymere gemäß Anspruch 1 bis 4, dadurch gekennzeichnet, daß als Komponente B2) Polyestercarbonatdiole aus (i) Hexandiol-1,6, (ii) ε-Caprolacton und (iii) Diphenylcarbonat eingesetzt worden sind.

6. Verfahren zur Herstellung von Isocyanatprepolymeren gemäß Anspruch 1 durch Umsetzung einer Isocyanatkomponente A), bestehend im wesentlichen aus mindestens einem cycloaliphatischen oder aromatischen Diisocyanat mit einer Polyolkomponente B) unter Einhaltung eines NCO/OH-Äquivalentverhältnisses von mindestens 1,5:1, gegebenenfalls unter anschließender destillativer Entfernung von nicht umgesetztem monomerem Diisocyanat bis auf einen Restgehalt von weniger als 0,5 Gew.-%, dadurch gekennzeichnet, daß die Polyolkomponente B) im wesentlichen aus einem Gemisch aus
B1) mindestens einem Polyetherpolyol des Molekulargewichtsbereichs 1000 bis 3000 einer (mittleren) Hydroxylfunktionalität von 2 bis 4 und
B2) mindestens einem Polyestercarbonatdiol des Molekulargewichtsbereichs 700 bis 3000 auf Basis (i) mindestens eines Diols des maximalen Molekulargewichts 200, (ii) ε-Caprolacton und/oder ε-Hydroxycapronsäure im Molverhältnis (i) : (ii) von 4:1 bis 1:3 und (iii) Diarylcarbonaten
im Gewichtsverhältnis B1) : B2) 0,25:1 bis 1,5:1 besteht.

7. Verwendung der Isocyanatprepolymeren gemäß Anspruch 1 bis 5 zur Herstellung von Dichtungs- oder Beschichtungsmaterialien.

## Claims

1. Isocyanate prepolymers with an NCO content of 1.5 to 5.0 wt.% and a monomeric diisocyanate content of less than 0.5 wt.%, which are the reaction products of
A) an isocyanate component consisting essentially of at least one aromatic or cycloaliphatic diisocyanate and
B) a polyol component,
characterised in that polyol component B) consists essentially of a mixture of
B1) at least one polyetherpolyol with a molecular weight in the range 1000 to 3000 and an (average) hydroxyl functionality of 2 to 4 and
B2) at least one polyestercarbonatediol with a molecular weight in the range 700 to 3000 based on (i) at least one diol with a maximum molecular weight of 200, (ii) ε-caprolactone and/or ε-hydroxycaproic acid in the molar ratio (i) : (ii) of 4:1 to 1:3 and (iii) diaryl carbonates
in the ratio by weight of B1) : B2) of 0.25:1 to 1.5:1.

2. Isocyanate prepolymers according to Claim 1, characterised in that component A) consists of at least one diisocyanate with different reactive isocyanate groups and that an NCO/OH ratio by equivalents of at most 2:1 is maintained during reaction of component A) and B).

3. Isocyanate prepolymers according to Claims 1 and 2, characterised in that 2,4-diisocyanatotoluene had been used as component A).

4. Isocyanate prepolymers according to Claims 1 to 3, characterised in that polyetherpolyols with an average molecular weight of 1500 to 2000 with ethylene oxide and propylene oxide units incorporated in the ratio by weight of 30:70 to 60:40 have been used as component B1).

5. Isocyanate prepolymers according to Claims 1 to 4, characterised in that polestercarbonate diols made from (i) hexanediol-1,6, (ii) ε-caprolactone and (iii) diphenyl carbonate have been used as component B2).

6. A process for preparing of isocyanate prepolymers according to Claim 1 by reacting an isocyanate component A), consisting essentially of at least one cycloaliphatic or aromatic diisocyanate with a polyol component B) while maintaining an NCO/OH ratio by equivalents of at least 1.5:1, optionally with subsequent distillative removal of unreacted monomeric diisocyanate down to a residual content of less than 0.5 wt.%, characterised in that the polyol component B) consists essentially of a mixture of
B1) at least one poletherpolyol with a molecular weight in the range 1000 to 3000 and an (average) hydroxyl functionality of 2 to 4 and
B2) at least one polyestercarbonatediol with a molecular weight in the range 700 to 3000 based on (i) at least one diol with a maximum molecular weight of 200, (ii) ε-caprolactone and/or ε-hydroxycaproic acid in the molar ratio (i) : (ii) of 4:1 to 1:3 and (iii) diaryl carbonates
in the ratio by weight of B1) : B2) of 0.25:1 to 1.5:1.

7. Use of isocyanate prepolymers according to Claims 1 to 5 to produce sealing or coating materials.

## Revendications

1. Prépolymères d'isocyanates à une teneur en NCO de 1,5 à 5,0 % en poids et une teneur en diisocyanate monomère inférieure à 0,5 % en poids, qui consistent en produits de réaction de
A) un composant isocyanate consistant essentiellement en au moins un diisocyanate aromatique ou cycloaliphatique, avec
B) un composant polyol,
et se caractérisent en ce que le composant polyol B) consiste lui-même essentiellement en un mélange de
B1) au moins un polyéther-polyol de poids moléculaire 1 000 à 3 000, à une fonctionnalité (moyenne) en groupes hydroxy de 2 à 4 et
B2) au moins un polyester-carbonate-diol de poids moléculaire 700 à 3 000, à base de (1) au moins un diol de poids moléculaire maximum 200, (ii) l'ε-caprolactone et/ou l'acide ε-hydroxycaproïque, à un rapport molaire (i):(ii) de 4:1 à 1:3, et (iii) des carbonates de diaryle,
dans des proportions relatives en poids B1)/B2) de 0,25:1 à 1,5:1.

2. Prépolymères d'isocyanates selon la revendication 1, caractérisés en ce que le composant A) consiste en au moins un diisocyanate à groupes isocyanates à réactivités différentes et en ce que, à la réaction entre les composants A) et B), on observe un rapport maximum de 2:1 entre les équivalents de NCO et les équivalents d'OH.

3. Prépolymères d'isocyanates selon les revendications 1 et 2, caractérisés en ce que le composant A) consiste en le 2,4-diisocyanatotoluène.

4. Prépolymères d'isocyanates selon les revendications 1 à 3, caractérisés en ce que le composant B1) consiste en polyéther-polyols à un poids moléculaire moyen de 1 500 à 2 000, contenant des motifs d'oxyde d'éthylène et d'oxyde de propylène dans des proportions relatives en poids de 30:70 à 60:40.

5. Prépolymères d'isocyanates selon les revendications 1 à 4, caractérisés en ce que le composant B2) consiste en polyester-carbonate-diols préparés à partir de (i) l'hexanediol-1,6, (ii) l'ε-caprolactone et (iii) le carbonate de diphényle.

6. Procédé de préparation des prépolymères d'isocyanates selon la revendication 1 par réaction d'un composant isocyanate A) consistant essentiellement en au moins un diisocyanate cycloaliphatique ou aromatique avec un composant polyol B), en respectant un rapport d'au moins 1,5:1 entre les équivalents de NCO et les équivalents d'OH, le cas échéant avec élimination subséquente par distillation du diisocyanate monomère non converti jusqu'à une teneur résiduelle inférieure à 0,5% en poids, caractérisé en ce que le composant polyol B) consiste essentiellement en un mélange de
B1) au moins un polyéther-polyol de poids moléculaire 1 000 à 3 000, à une fonctionnalité (moyenne) en groupes hydroxy de 2 à 4 et
B2) au moins un polyester-carbonate-diol de poids moléculaire 700 à 3 000, à base de (i) au moins un diol de poids moléculaire maximum 200, (ii) l'ε-caprolactone et/ou l'acide ε-hydroxycaproïque, à un rapport molaire (i):(ii) de 4:1 à 1:3, et (iii) des carbonates de diaryle,
à des proportions relatives en poids B1)/B2) de 0,25:1 à 1,5:1.

7. Utilisation des prépolymères d'isocyanates selon les revendications 1 à 5 pour la préparation de matières d'étanchéité ou de revêtement.
